(19) Europäisches Patentamt
European Patent Office
Office européen des brevets

(11) **EP 3 672 808 B1**

(12) **EUROPÄISCHE PATENTSCHRIFT**

(45) Veröffentlichungstag und Bekanntmachung des Hinweises auf die Patenterteilung:
**10.07.2024  Patentblatt 2024/28**

(21) Anmeldenummer: **18759286.0**

(22) Anmeldetag: **21.08.2018**

(51) Internationale Patentklassifikation (IPC):
**B41F 33/00** *(2006.01)*   **B41F 13/004** *(2006.01)*

(52) Gemeinsame Patentklassifikation (CPC):
**B41F 13/0045; B41F 33/0009; H02P 5/50;
H02P 23/03; H02P 23/04**

(86) Internationale Anmeldenummer:
**PCT/EP2018/072590**

(87) Internationale Veröffentlichungsnummer:
**WO 2019/038305 (28.02.2019 Gazette 2019/09)**

(54) **REGELUNG VON DRUCKMASCHINEN MIT MEHREREN HAUPTANTRIEBSMOTOREN**

CONTROL OF PRINTING PRESSES HAVING A PLURALITY OF MAIN DRIVE MOTORS

RÉGULATION DE MACHINES D'IMPRESSION AVEC PLUSIEURS MOTEURS D'ENTRAÎNEMENT PRINCIPAUX

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **21.08.2017   DE 102017119075**

(43) Veröffentlichungstag der Anmeldung:
**01.07.2020   Patentblatt 2020/27**

(73) Patentinhaber: **manroland sheetfed GmbH
63075 Offenbach (DE)**

(72) Erfinder:
• **KUBASIAK, Nicolai
64291 Darmstadt (DE)**
• **LENZ, Eric
64289 Darmstadt (DE)**

(56) Entgegenhaltungen:
**DE-A1- 10 309 670     DE-A1- 102008 048 406
DE-A1- 19 502 909     DE-A1- 4 132 765
DE-A1- 4 218 604**

**Beschreibung**

Die Erfindung betrifft eine Regelung von Druckmaschinen, insbesondere Bogendruckmaschinen, mit mehreren Motoren (Hauptantriebsmotoren) nach dem Oberbegriff von Anspruch 1.

Aus DE 10 2008 042 396 A1 ist ein Antrieb für eine Rotationsdruckmaschine mit mehreren Werken bekannt. Die Werke sind als Druck- oder Lackwerke ausgebildet. Es handelt sich um eine Rotationsdruckmaschine mit einem werkübergreifenden Antriebsräderzug, der eine Mehrzahl von Rotationskörpern während eines Druckbetriebs antreibt. Die Rotationsdruckmaschine weist weiterhin mindestens einen Hauptantriebsmotor auf, der Antriebsdrehmomente in den Antriebsräderzug einspeist, wobei zumindest einem weiteren Rotationskörper in den Werken jeweils ein Einzelantrieb zugeordnet ist und die weiteren Rotationskörper mit den vom Antriebsräderzug angetriebenen Rotationskörpern in einem Drehmomente übertragenden Kontakt stehen. Die Aufgabe dieser Erfindung besteht darin, den Hauptantrieb in Druckmaschinen mit Einzelantrieben zu verbessern. Dies wird dadurch gelöst, dass der Hauptantriebsmotor ein als High-Torque-Motor ausgebildeter Langsamläufer ist, der direkt oder über ein vorzugsweise einstufiges Vorlegegetriebe mit hoher Steifigkeit dem Antriebsräderzug zugeordnet ist.

DE 10 2007 049 455 B4 offenbart ein Verfahren zum Betreiben einer Druckmaschine, insbesondere einer Bogenoffsetdruckmaschine, bei welcher mindestens zwei unabhängig voneinander lageregelbare Antriebe in einem durchgehenden Räderzug der Druckmaschine eintreiben. Mit dem Räderzug gekoppelte, anzutreibende Einrichtungen, insbesondere Druckwerke und/oder Lackwerke, der Druckmaschine werden derart angetrieben, dass jeder Antrieb dem Antreiben einer dem jeweiligen Antrieb zugeordneten, mindestens eine anzutreibende Einrichtung umfassenden Teileinheit der Druckmaschine dient. Die Eintriebstellen der Antriebe werden zur Bereitstellung einer Winkeldifferenz zueinander verdreht. Für die in den durchgehenden Räderzug eintreibenden Antriebe wird eine gewünschte Drehmomentverteilung derart bestimmt, dass jeder Antrieb einerseits für die demselben zugeordneten Teileinheit und weiterhin für die einem dem jeweiligen Antrieb nachgeordneten Antrieb zugeordnete Teileinheit ein Antriebsdrehmoment bereitstellt. Auf Basis dieser Drehmomentverteilung wird für jeden Antrieb ein individueller Winkelsollwert ermittelt. Auf Grundlage dessen wird jeder Antrieb individuell lagegeregelt, um eine von der Drehmomentverteilung abhängige Winkeldifferenz zwischen den Eintriebstellen der Antriebe bereitzustellen. Bei der individuellen Lageregelung der Antriebe wird die sich bei der Lagerregelung tatsächlich einstellenden Drehmomentverteilung ermittelt. Hierbei wird überprüft, ob die sich tatsächliche einstellende Drehmomentverteilung innerhalb eines durch einen oberen Grenzwert und einen unteren Grenzwert definierten Toleranzbands um die gewünschte Drehmomentverteilung liegt. Wenn hierbei festgestellt wird, dass die tatsächliche Drehmomentverteilung innerhalb des Toleranzbands liegt, bleiben die Winkelsollwerte zur Lageregelung der antreibe unverändert. Wenn hierbei festgestellt wird, dass die tatsächliche Drehmomentverteilung außerhalb des Toleranzbands liegt, wird mindestens ein Winkelsollwerte zur Lageregelung eines Antriebs derart automatisch verändert, dass die tatsächliche Drehmomentverteilung wieder innerhalb des Toleranzbands liegt.

Eine Drehzahlregeleinrichtung für einen Mehrmotorenantrieb für Druckmaschinen mit mehreren durch einen Räderzug verbundenen Druckwerken, einem drehzahlgeregelten Leitmotor und einem in Abhängigkeit vom Leitmotor drehmomentgeregelten Motor an einem anderen Druckwerk, einem dem Leitmotor und dem Motor vorgeordneten Regelstrecke, bestehend aus einem Drehzahlgeber, der dem Leitmotor zugeordnet ist und schwingungsüberlagerte Drehzahlwerte in die Regelstrecke einspeist, einem Drehzahlsummationspunkt $n_{soll}/n_{ist}$ und einem Drehzahlregler, ist aus DE 195 02 909 B4 bekannt. Die dem Leitmotor und dem weiteren Motor vorgeordnete Regelstrecke enthält auch einen Stromregler, der den Gesamtmotorstrom in einem einstellbaren Verhältnis auf den Leitmotor und den Motor aufteilt, und zur Einspeisung eines drehzahlangepassten Drehmomentes durch den Motor in die Druckmaschine zwischen dem Stromregler und dem Motor ein den Motorstrom für den Motor begrenzender und zusätzliche Schwingungen erzeugende Stromspitzen aus dem Motorstrom abtrennender Strombegrenzer angeordnet ist.

Aus DE 10 2008 048 406 A1 ist eine Vorrichtung zur Steuerung einer Bogenrotationsdruckmaschine mit wenigstens zwei auf einen Zahnräderzug einwirkenden elektrischen Antriebsmotoren bekannt, wobei der Zahnräderzug mehrere Druckwerke in der Bogenrotationsdruckmaschine mechanisch miteinander verbindet. Die Erfindung zeichnet sich dadurch aus, dass die elektrischen Antriebsmotoren je eine Regelschleife mit einem höherfrequenten Regelglied aufweisen und dass in wenigstens einer Regelschleife der Antriebsmotoren ein niederfrequentes Regelglied vorhanden ist, dessen Ausgangssignal in einem vorgegebenen Verhältnis auf die Regelschleifen der Antriebsmotoren aufgeschaltet wird.

Aus DE 41 32 765 A1 ist eine Drehzahlregeleinrichtung für einen Mehrmotorenantrieb für Druckmaschinen bekannt, wobei die Drehzahlregeleinrichtung mit durch einen Räderzug verbundenen Druckwerken und einer einem Führungsantriebsmotor vorgeordneten Regelstrecke, bestehend aus einem Drehzahlsollwertgeber, dem über einen Drehzahlsummationspunkt, einen Drehzahlregler, einen Stromsummationspunkt, einen Stromregler und eine Ansteuereinrichtung, einschließlich Leistungsteil, der Führungsantriebsmotor nachgeordnet, ein mit dem Führungsantriebsmotor verbundener Tachogenerator mit dem Stromsummationspunkt und der dem Leistungsteil vorgeordnete Stromistwertgeber mit dem Stromsummationspunkt verbunden ist, wobei jedem weiteren Antriebsmotor über eine Motoransteuereinrichtung, einen Motorstromregler und einen Motorstromsummationspunkt ein Stromsollwertgeber vorgeordnet und der Stromsollwertgeber mit dem Ausgang des Drehzahlreglers und der dem Motorleistungsteil vorgeordnete Motorstromistwertgeber mit dem Motorstromsummationspunkt verbunden ist.

Aus DE 42 18 604 A1 ist ein Antrieb für eine Druckmaschine mit mehreren Druckwerken bekannt, wobei die Druckwerke über einen Räderzug miteinander in Verbindung stehen und wobei jedem Druckwerk ein Motor zugeordnet ist, der Leistung in den Räderzug einspeist, wobei eine Regeleinrichtung vorgesehen, die Information über eine Registerabweichung zwischen zwei Druckwerken erhält und die die Registerabweichung durch eine entsprechende Änderung des Leistungsverhältnisses der beiden Motoren korrigiert.

Aus DE 103 09 670 A1 ist eine Regelvorrichtung mit welcher periodische Störungen ausgeregelt und/oder kompensiert werden können bekannt. Die Regelvorrichtung beseht aus einem Antrieb mit Drehzahl- und Lageregelung sowie unterlagerter Drehmomentregelung unter Verwendung eines motorseitigen Drehgebers, aus dessen Signalen die motorseitigen Größen Drehwinkel, Drehzahl und Beschleunigung bestimmbar sind, wobei das Antriebssystem noch einen Sollwertgenerator und einen Stromrichter umfasst und mittels eines Beobachters lastseitige Daten berechenbar sind, der Beobachter eingangsseitig mit dem motorseitigen Regler, dem Stromrichter und dem motorseitigen Drehgeber und ausgangsseitig mit einem lastseitigen Regler verbindbar ist, wobei der Beobachter den lastseitigen Schleppfehler aus dem antriebsseitigen Schleppfehler und dem Torsionswinkel der Antriebswelle berechnet, dem lastseitigen Regler Größen, insbesondere eine Soll-Drehzahl vom Sollwertgenerator, sowie Lastmoment, IstDrehzahl der Last und lastseitiger Schleppfehler vom Beobachter übermittelbar und daraus für den motorseitigen Regler Stell- und Korrekturwerte berechen- und vorgebbar sind.

Der Erfindung liegt die Aufgabe zugrunde, eine Regelung von Druckmaschinen mit mehreren Motoren (Hauptantriebsmotoren) zu schaffen, mit der die Druckqualität verbessert wird.

Die Aufgabe wird durch die Ausbildungsmerkmale des Hauptanspruchs gelöst. Vorteilhafte Weiterbildungen ergeben sich aus den Unteransprüchen, der Beschreibung und den Figuren.

Eine vorteilhafte Realisierungsmöglichkeit besteht darin, dass die Regelgröße für die Maschinendrehzahl unabhängiger von lokalen Drehzahlschwankungen wird, wenn diese durch eine gewichtete Mittelung einzelner Drehzahlwerte gewonnen wird. In vorteilhafter Weise können die einzelnen Massenträgheiten des Antriebsstrangs als Gewichte verwendet werden. Ein weiterer Vorteil besteht darin, dass durch die Regelung die Drehmomentrichtungen innerhalb des Antriebsstrangs beeinflusst und eine Änderung während des Betriebs verhindert werden kann, wodurch ein mögliches Zahlflankenabheben verhindert wird. Verändert sich beispielsweise der Gesamtdrehmomentbedarf der Druckmaschine angesichts geänderter Maschinenzustände, wie Produktionsdrehzahl (Maschinendrehzahl), Maschinenerwärmung oder Druckmodulzuständen etc., so ändert sich auch der Drehmomentfluss innerhalb des Räderzugs und eine geänderte mittlere Verschiebung zwischen den einzelnen Modulen stellt sich ein. Diesem drucktechnisch nachteiligen Effekt kann ebenso mit der Vorgabe von Differenzdrehmomenten oder durch Änderung der Aufteilung des gesamten Antriebsdrehmoments auf die einzelnen Hauptantriebsmotoren entgegengewirkt werden. In vorteilhafter Weise wirkt sich die Regelung nicht nur lokal auf benachbarte Druckwerke aus, sondern auf die gesamte Maschine und die gemessenen Drehzahlen bzw. die Ausgangsfehler haben eine globale Wirkung auf alle Motoren.

Erfindungsgemäß werden Drehzahlschwankungen unterdrückt bzw. kompensiert, sodass eine Drehschwingungsdämpfung bzw. eine Drehschwingungskompensation erfolgt.

Zur Regelung der Maschinendrehzahl wird eine zentrale Reglereinheit verwendet. Für die Regelung werden insbesondere mehrere aktuelle Drehzahlen von verschiedenen Positionen des Antriebsstrangs verwendet. Die einzelnen Drehzahlen können mit Sensoren erfasst oder mit Hilfe eines Beobachters geschätzt werden. Als Reglerstruktur wird eine PI-Mehrgrößenreglerstruktur verwendet. Diese Struktur kann mit einer Eingangsverkopplung vorteilhaft vereinfacht werden, mit der eine feste oder variable Drehmomentaufteilung realisiert werden kann. Das Führungsverhalten (langsame Dynamik) und das Störverhalten (schnelle Dynamik) kann praktisch getrennt behandelt werden (zweischrittiges Vorgehen).

Als Regelgröße wird eine Geschwindigkeitsgröße (Maschinendrehzahl) und gegebenenfalls mehrere Differenzdrehmomente verwendet. Die Geschwindigkeitsgröße kann beispielsweise vorteilhaft aus dem Impulssatz abgeleitet werden und ergibt sich aus der durch die einzelnen Massenträgheiten gewichteten Mittelung der einzelnen Geschwindigkeiten bzw. Drehzahlen. Als Differenzdrehmomente werden die Differenzen zwischen den Einspeisedrehmomenten der Motoren gewählt.

Für die Positionierung der Antriebsmotoren am Antriebsstrang werden die Eigenformen des Antriebsstrangs und die Positionen wesentlicher Störquellen herangezogen. Hierbei bieten sich insbesondere die beiden Randpositionen im letzten und ersten Modul, wie auch im mittleren Bereich am Wendungsmodul an.

Mit Hilfe geeigneter Vorgabe der Differenzdrehmomentsollwerte oder einer geeigneten Wahl der Aufteilung des gesamten Antriebsdrehmoments auf die einzelnen Hauptantriebsmotoren kann einem möglichem Zahnflankenabheben im Antriebsstrang (Räderzug) entgegengewirkt werden.

Die Reglerparameter werden durch Optimierung einer Systemnorm (H2) gewonnen. Das zu optimierende System weist die wesentlichen Störpositionen als Systemeingänge und die für die Druckqualität relevanten Differenzwinkel als Systemausgänge zur Berechnung der Systemnorm auf.

Mittels einer Regelung von Druckmaschinen, insbesondere Bogendruckmaschinen, mit einem oder mehreren Hauptantriebsmotoren, die über einen Antriebsstrang verbunden sind, wird erfindungsgemäß für die Regelung einer Maschinendrehzahl und einer aktiven Dämpfung von Schwingungen (Drehschwingungsdämpfung) eine zentrale Reglereinheit verwendet, wobei für die Regelung mehrere Drehzahlen von verschiedenen Positionen des Antriebsstrangs verwendet werden, wobei die Drehzahlen mit Sensoren erfasst und/oder mit Beobachtern geschätzt werden.

In vorteilhafter Weise wirkt jede Drehzahl auf alle Hauptantriebsmotoren oder mehrere Ausgansfehler wirken auf alle Hauptantriebsmotoren.

In vorteilhafter Weise wird eine Maschinendrehzahlregelgröße aus der gewichteten Mittelung von verschiedenen aktuellen Drehzahlen berechnet, wobei die jeweiligen Gewichte sich aus den Massenträgheiten des Antriebsstrangs ergeben.

In vorteilhafter Weise werden neben einer Maschinendrehzahlregelgröße weitere Regelgrößen wie vorzugsweise Stelldrehmomentdifferenzen gewählt. Als Regelgröße kann eine Geschwindigkeitsgröße (Maschinendrehzahl) verwendet werden, die aus einem Impulssatz abgeleitet wird, und/oder ein oder mehrere Differenzdrehmomente verwendet werden, die aus den Differenzen zwischen den Einspeisedrehmomenten der Motoren gewählt werden.

Erfindungsgemäß wird als Reglerstruktur ein PI-Mehrgrößenregler verwendet, wobei die Reglerstruktur mit einer Eingangsverkopplung derart vereinfacht wird oder verkoppelt werden kann, dass eine feste oder variable von einem Zustand der Druckmaschine abhängige Drehmomentaufteilung realisiert wird.

In vorteilhafter Weise werden die Differenzdrehmomente so gewählt, dass ein Zahnflankenabheben im Antriebsstrang verhindert wird.

In vorteilhafter Weise erfolgt der Reglerentwurf nach Führungsverhalten und Störverhalten getrennt.

In vorteilhafter Weise werden Reglerparameter durch Optimierung einer Systemnorm (beispielsweise einer H2-Systemnorm) gewonnen, wobei das zu optimierende System die Positionen wesentlicher Störquellen als Systemeingänge und die für die Druckqualität relevanten Differenzwinkel (zum Beispiel die Differenzwinkel benachbarter Druckmodule) als Systemausgänge aufweist.

In vorteilhafter Weise werden für die Positionierung der Antriebsmotoren Eigenformen des Antriebsstrangs und/oder Positionen wesentlicher Störquellen herangezogen, wobei sich vorzugsweise die Antriebsmotoren in den Randpositionen im letzten und/oder im ersten Modul, und/oder im Bereich eines Wendungsmoduls befinden.

Ausführungsbeispiele der Erfindung werden, ohne hierauf beschränkt zu sein, an Hand der Figuren näher erläutert. Dabei zeigen schematisch:

Fig. 1    einen modularen Aufbau einer Bogenoffsetdruckmaschine mit zentraler Reglereinheit
Fig. 2    ein vereinfachtes Antriebsstrangmodell für einen Reihenschwinger,
Fig. 3    normierte Eigenformen eines ungedämpften Antriebstragmodells
Fig. 4    einen Vergleich von Amplitudengängen mit dem Verlauf der Frobenius-Norm von $\mathbf{H}(\omega)$,
Fig. 5    ein Drehmomentfluss innerhalb des Räderzugs,
Fig. 6    eine Regelstruktur für eine PI-Mehrgrößen-Ausgangsrückführung,
Fig. 7    eine PI-Ausgangsrückführung mit einer Eingangsverkopplung,
Fig. 8    Verläufe der Frobenius-Norm für eine statische Drehzahlrückführung, für variierte Anzahl an Hauptantriebsmotoren mit verschiedenen Positionen am Antriebsstrang und
Fig. 9    den Verlauf der Frobenius-Norm einer statischen Rückführung für unterschiedliche Systemausgänge mit gleicher Position der Hauptantriebsmotoren.

Es wird die Regelung von Bogenoffsetdruckmaschinen mit mehreren Hauptantriebsmotoren behandelt. Angefangen von der Modellierung des Antriebsstrangs über die modale Untersuchung des Schwingungsverhaltens werden zwei verschiedene Regelungsstrukturen für mehrere Hauptantriebsmotoren vorgestellt. Dabei wird auf druckmaschinenspezifische Besonderheiten eingegangen und unterschiedliche Antriebskonfiguration (Anzahl und Position von Motoren) verglichen.

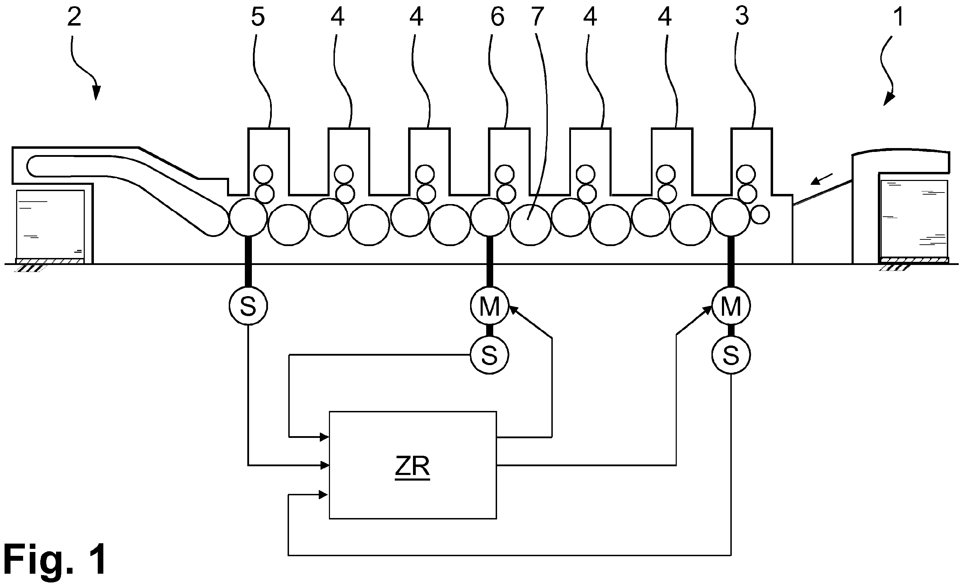

Fig. 1 zeigt den modularen Aufbau einer Bogenoffsetdruckmaschine. Zum Bedrucken der Bögen werden diese zunächst am Anleger 1 von einem Stapel vereinzelt und nacheinander dem ersten Druckmodul 3 zugeführt. Im ersten Druckmodul 3 wird der einzelne Bogen auf Maschinendrehzahl beschleunigt und mit der ersten Druckfarbe bedruckt. Der Bogen durchläuft die folgenden Druckmodule 4 und/oder Lackmodule 5 und wird anschließend am Ausleger 2 abgebremst und wieder zu einem Stapel abgelegt. Durch den modularen Aufbau kann eine Druckmaschine an spezifische Kundenwünsche durch eine variable Anzahl an Modulen und Modulkombinationen angepasst werden. Es besteht beispielsweise die Möglichkeit ein Wendemodul 6 mit einer Wendetrommel 7 vorzusehen, um den Bogen zu wenden und beidseitig zu bedrucken.

Die sich bewegenden Teile innerhalb der Module, wie Walzen, Zylinder usw., werden im Allgemeinen durch einen maschinenweiten Räderzug (in Fig. 1 nicht gezeigt) miteinander verbunden und bilden den Antriebsstrang. Zum Antreiben der Druckmaschine können ein oder mehrere Motoren M (Hauptantriebsmotoren) verwendet werden. Eine beispielhafte Anordnung der Motoren M ist in Fig. 1 dargestellt. Die Regelung erfolgt über eine zentrale Reglereinheit ZR, Stellglieder M (hier Motoren) und Sensoren S. Die Sensoren S können beispielsweise Winkel- oder Drehzahlsensoren sein. Bei dieser Regelung ist es nicht zwingend erforderlich, dass die Anzahl der Stellglieder M und Sensoren S identisch ist, vgl. Fig. 1.

Hauptaufgabe der Regelung ist das Einstellen der gewünschten Maschinendrehzahl (Festsollwertregelung der Starrkörperdrehzahl) und der Unterdrückung von lokalen Drehzahlschwankungen (aktive Drehschwingungsdämpfung). Dabei ist für die Druckqualität die lagesynchrone Bewegung der einzelnen druckbildführenden und bogentransportierenden Teile von entscheidender Bedeutung. Der Antriebsstrang stellt ein schwingfähiges System dar, welches im Wesentlichen durch periodische, drehzahl- und winkelabhängige Störungen zu Schwingungen angeregt wird, wodurch es zu Abweichungen in der Lagesynchronität einzelner Teile kommt, die die Druckqualität negativ beeinflussen können. Bei der Auslegung ist darauf zu achten, dass kein Zahnflankenwechsel im Druckbetrieb auftritt, der zu erheblichen Lageabweichungen und zu einer unbrauchbaren Druckqualität führen würde.

Zur Modellierung des wesentlichen Drehschwingungseigenverhaltens des Antriebstrangs im unteren Frequenzbereich bis ca. 50 Hz werden häufig lineare Mehrkörpersysteme verwendet, bei denen einzelne reale Massenträgheiten zu Ersatzmassenträgheiten $m_k$ zusammengefasst und einer mechanischen Koordinate $q_k$ zugeordnet werden. Diese Trägheiten sind durch lineare Ersatzsteifigkeiten $k_k$ und Ersatzdämpfungen $b_k$ miteinander verbunden. Solch ein vereinfachtes, lineares und passives Mehrkörpersystem mit dem Krafteingangsvektor $\mathbf{f}$ wird durch die Bewegungsgleichung

$$\mathbf{M}\,\ddot{\mathbf{q}} + \mathbf{B}\,\dot{\mathbf{q}} + \mathbf{K}\,\mathbf{q} = \mathbf{f} \qquad\qquad \text{(Gl. 1)}$$

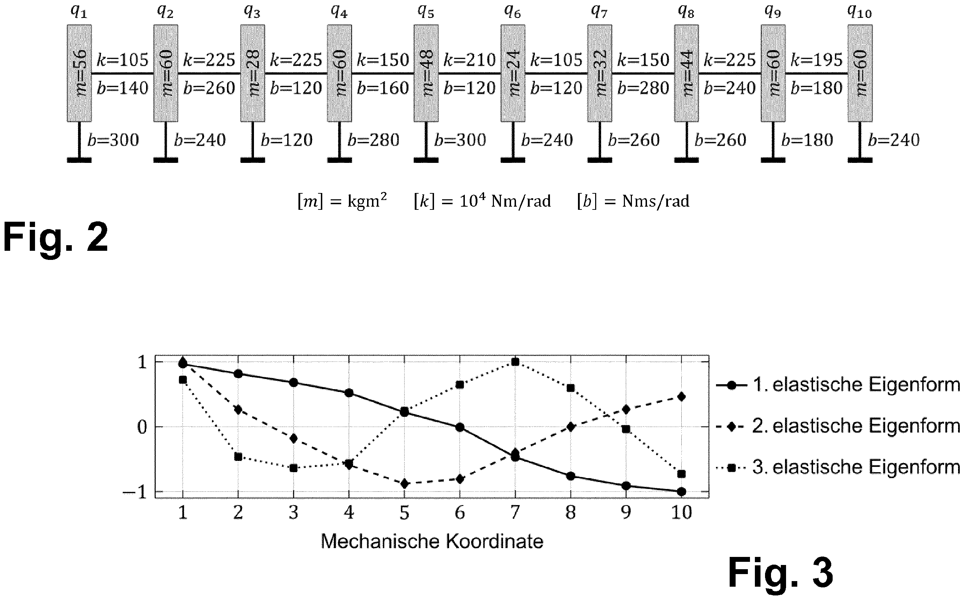

mit der Massenmatrix $\mathbf{M}$, der Dämpfungsmatrix $\mathbf{B}$ und der Steifigkeitsmatrix $\mathbf{K}$ beschrieben. Häufig lässt sich als Grundform des Antriebsstrangs ein Torsionsschwinger mit glattem Wellenstrang ohne Verzweigung und Vermaschung annehmen. Fig. 2 zeigt das hier weiter verwendete vereinfachte Antriebstrangmodell mit $N = 10$ mechanischen Freiheitsgraden und realitätsnahen Parametern für eine Druckmaschine mit zehn Modulen.

Die geringe und über den Antriebsstrang verteilte mechanische Dämpfung kann zur modalen Untersuchung vernachlässigt werden. Die Dämpfungsmatrix $\mathbf{B}$ aus (Gl. 1) kann entfallen, womit das ungedämpfte System $\mathbf{M}\,\ddot{\mathbf{q}} + \mathbf{K}\,\mathbf{q} = \mathbf{f}$ entsteht.

Aufgrund der Symmetrie der mechanischen Systemmatrizen $\mathbf{M}$ und $\mathbf{K}$ lässt sich eine reguläre Modalmatrix $\boldsymbol{\Psi}_0 \in \mathbb{R}^{N \times N}$ finden, mit deren Hilfe das ungedämpfte System in die Modalkoordinatendarstellung

$$\mathbf{I}\,\ddot{\mathbf{p}} + \boldsymbol{\Lambda}_0\,\mathbf{p} = \boldsymbol{\Psi}_0^{\mathbf{T}}\,\mathbf{f} \quad \text{mit} \quad \mathbf{q} = \boldsymbol{\Psi}_0\,\mathbf{p} \qquad\qquad \text{(Gl. 2)}$$

mit der Diagonalmatrix der Eigenwerte $\Lambda_0$ überführt werden kann ("massnormalisation"). Die einzelnen $N$ Differenzialgleichungen zweiter Ordnung in (Gl. 2) sind entkoppelt und beschreiben jeweils einen ungedämpften PT2-Schwinger, der jeweils von den restlichen PT2-Schwingern unabhängig ist. Die $N$ bezüglich der Massen- und Steifigkeitsmatrix orthogonalen Spalten der Modalmatrix $\Psi_0$ werden im Weiteren Eigenformen $\psi_{0,i}$ genannt und beschreiben zum einen, wie sich das Eigenverhalten aus den einzelnen modalen PT2-Schwingern zusammen setzt und zum anderen geben sie den Einfluss des Kraftvektors $\mathbf{f}$ auf die einzelnen modalen PT2-Schwinger wieder. Damit wird anschaulich, dass das $k$-te Element der $i$-ten Eigenform ein Maß für die Steuer- und die Beobachtbarkeit des jeweiligen $i$-ten ungedämpften Eigenwerts $\omega_{0,i}^2$ an dem $k$-ten mechanischen Freiheitsgrad $q_k$ ist. Fig. 3 zeigt die ersten drei elastischen Eigenformen des hier behandelten Beispielsystems ohne Dämpfung. Charakteristisch für das hier untersuchte ungefesselte System sind die Schwingungsbäuche, die - insbesondere für niederfrequente Eigenformen - jeweils am Rand des Reihenschwingers auftreten (vgl. homogene Torsionsschwingerkette).

Der Einfluss einer periodischen Störerregung $z_j$ auf einen Systemausgang, wie zum Beispiel die Differenzposition $d_i$ zweier mechanischer Freiheitsgrade, wird im Frequenzspektrum durch den Frequenzgang $h_{d_i \leftarrow z_j}(\omega)$ mit der Kurzschreibweise $(d_i \leftarrow z_j)$ beschrieben. Verschiedene Frequenzgänge können in einer Frequenzgangmatrix zusammengefasst werden, wie beispielsweise die Übertragungspfade von allen Störeingängen auf alle Differenzpositionen $\mathbf{H}_{\mathbf{d} \leftarrow \mathbf{z}}(\omega)$ mit der Kurzschreibweise $(\mathbf{d} \leftarrow \mathbf{z})$.

Für die einfache visuelle Bewertung vieler relevanter Frequenzgänge kann der Verlauf der Frobenius-Norm der Frequenzgangmatrix über der Frequenz $\omega$,

$$\|\mathbf{H}(\omega)\|_{\mathrm{F}} = \sqrt{\textstyle\sum_{i,j}\big|h_{ij}(\omega)\big|^{2}} \,, \qquad\qquad\qquad (\mathrm{Gl.}\ 3)$$

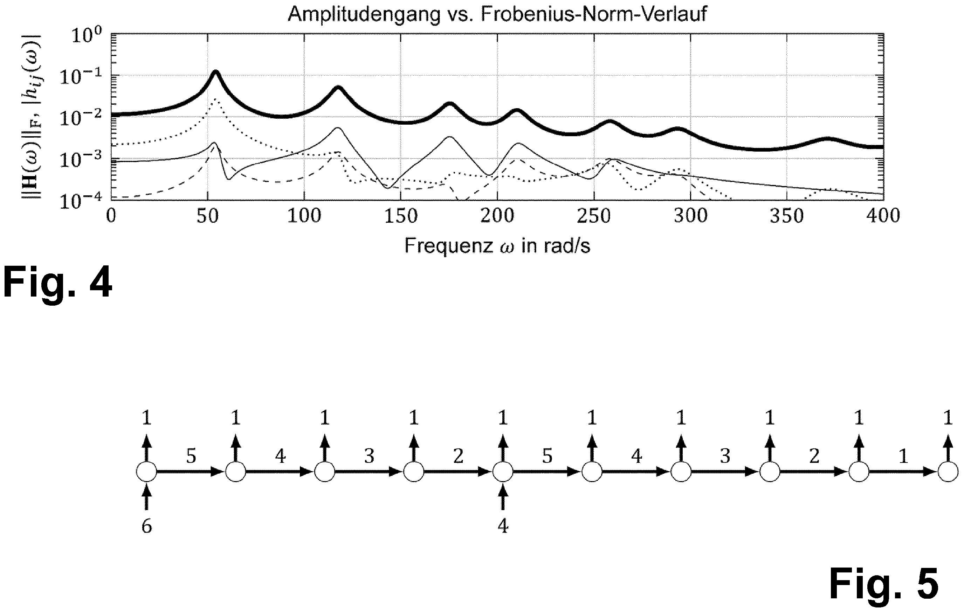

herangezogen werden. Diese quadratische Summe aller Amplitudengänge an der jeweiligen Frequenzstelle ist in Fig. 4 für das hier verwendete Beispielmodell mit logarithmierter Amplitude gezeigt (fette Linie). Zum Vergleich sind zusätzlich einige Amplitudengänge aus der Frequenzgangmatrix (dünne Linien) dargestellt. Die skalare Funktion der Frobenius-Norm über der Frequenz lässt alle Resonanzüberhöhungen erkennen, welche sich in den einzelnen Amplitudengängen nur teilweise deutlich zeigen, womit sich die Frobenius-Norm gut zur visuellen Bewertung einer Frequenzgangmatrix eignet. Charakteristisch für den Kraft-(Differenz)Positions-Amplitudengang ist der prinzipielle Abfall des Amplitudengangs zu höheren Frequenzen hin. Für den späteren Reglerentwurf wird die H2-Systemnorm

$$\|\mathbf{H}\|_{2} = \sqrt{\frac{1}{2\pi}\int_{-\infty}^{\infty}\sum_{i,j}\big|h_{ij}(\omega)\big|^{2}\ \mathrm{d}\omega} = \sqrt{\frac{1}{2\pi}\int_{-\infty}^{\infty}\|\mathbf{H}(\omega)\|_{\mathrm{F}}^{2}\ \mathrm{d}\omega} \qquad\qquad (\mathrm{Gl.}\ 4)$$

verwendet, bei der anschaulich die Funktion der Frobenius-Norm über die Frequenz zu einer skalaren Größe integriert wird.

Stellgrößen:

Werden mehrere Motoren zur Regelung verwendet, so stellt sich die Frage, welche örtliche Lage für die einzelnen Motoren für das Dämpfen von Resonanzüberhöhungen günstig ist. Aus Fig. 3 ist ersichtlich, dass sich bei den Eigenformen - insbesondere für niederfrequente Resonanzen - immer Schwingungsbäuche an den Rändern ausbilden, woraus sich eine gute Beobachtbar- und Steuerbarkeit des entsprechenden Eigenwertes ableiten lässt. Dem daraus motivierten Positionieren zweier Motoren an den Rändern des Reihenschwingers steht als Nachteil ein mögliches Abheben von Zahnflanken im Räderzug gegenüber. Dies kann - aufgrund von Störungen, die die Drehmomentrichtungen innerhalb des Räderzugs temporär ändern - zu den bereits genannten Problemen führen. Der im Weiteren verfolgte Ansatz sieht vor, dass der erste Antrieb einem Ende, vorzugsweise dem Modul eins, zugeordnet wird und die restlichen Motoren so verteilt werden, dass der jeweilige Motor immer über einen möglichen folgenden Motor hinaus treibt. Fig. 5 skizziert die Idee an einem Beispiel, bei dem das benötigte Antriebsdrehmoment über zwei Motoren eingespeist wird. Zur Veranschaulichung sollen die einzelnen Module einen gedachten Drehmomentbedarf von je 1 benötigen. Der erste Motor im ersten Modul (links) treibt die folgenden sechs Module über die Einspeisestelle des zweiten Motors im Modul fünf hinaus an. So wird die Drehmomentrichtung von links nach rechts - je nach Drehmomentaufteilung - unempfindlich gegenüber Störerregungen. Das Positionieren eines Motors im ersten Modul bietet zusätzlich die Möglichkeit, ein einflussreiches deterministisches Stördrehmoment direkt am Entstehungsort zu kompensieren, welches durch Mechanismen zur Beschleunigung des Bogens auf Druckgeschwindigkeit (Maschinendrehzahl) entsteht.

Bei Wendungsmaschinen existiert, in der Regel im mittleren Bereich der Druckmaschine, eine Wendeeinheit, die ebenfalls einen vergleichsweise großen Störerreger darstellt. Ein Motor in örtliche Nähe der Wendeeinheit ist auch hier vorteilhaft, um Störungen direkt am Entstehungsort zu kompensieren. Hinzu kommt die Anforderung eines speziellen Einrichtbetriebs, bei dem die Druckmaschine am Ort der Wendeeinheit sehr genau positioniert werden muss, wofür ein Stellglied in unmittelbar örtlicher Nähe ebenfalls günstig ist.

Regelgrößen:

Das Regelziel ist die möglichst synchrone Bewegung aller Teile des Antriebsstrangs. Dabei können maximal so viele Regelgrößen gewählt werden, wie unabhängige Stellgrößen existieren.

Für die Regelung der Maschinendrehzahl kann die mittlere Drehzahlgröße $v_{\mathrm{ges}}$ als Regelgröße verwendet werden, welche aus dem Impuls

$$I_{\mathrm{ges}} = \sum_{k=1}^{N} m_k\,\dot{q}_k = m_{\mathrm{ges}}\,v_{\mathrm{ges}} \qquad\qquad\qquad (\mathrm{Gl.}\ 5)$$

abgeleitet wird. Durch diese gewichtete Mittelung der einzelnen Drehzahlen mit der jeweiligen Massenträgheit wird die Regelgröße weitestgehend unabhängig von lokalen Abweichungen insbesondere durch andere Eigenbewegungen.

Als weitere Regelgrößen werden die Differenzen zwischen den Stellgrößen vorgeschlagen. Mit deren Hilfe kann die Aufteilung des Antriebdrehmoments beeinflusst, auf einen geänderten Gesamtdrehmomentbedarf der Druckmaschine reagiert und somit einem möglichen Flankenabheben im Zahnräderzug entgegengewirkt werden. Darüber hinaus kann der Änderung von statischen Differenzwinkeln zwischen den einzelnen Modulen - aufgrund geänderter zu übertragender Drehmoment innerhalb des Räderzugs - entgegengewirkt werden (Umfangsregisterdrift). Solch eine Änderung kann beispielsweise durch eine geänderte Maschinendrehzahl oder ein geänderter Erwärmungszustand der Druckmaschine auftreten. Es wird praktisch eine so hohe Differenz zwischen den Stelldrehmomenten gewählt, dass auftretende Störungen keine wesentliche Änderungen im Drehmomentfluss und auf keinen Fall ein Vorzeichenwechsel verursachen.

Messgrößen:

Für die Wahl der Messorte sind zunächst - analog zu den Stellgrößen - wieder die Enden des Räderzugs günstig. Daneben sind aus praktischen Gründen die Stellorte selbst vorteilhaft. Als Rückführgrößen für die Regelung werden Drehzahlen gewählt, da bei der Verwendung von Winkellagen hohe Anforderungen an die zeitlich synchrone Erfassung und die Winkelauflösung bestehen. Darüber hinaus beeinflusst eine statische Drehzahlrückführung $\mathbf{u} = \mathbf{R}\,\mathbf{q}$ - mit der Reglermatrix $\mathbf{R}$ und dem sich ergebenen Kraftvektor $\mathbf{f} = \mathbf{u} + \mathbf{z}$ aus Stellgrößen $\mathbf{u}$ und Störungen $\mathbf{z}$ - direkt die Dämpfungsmatrix in der Bewegungsgleichung (Gl. 1),

$$\mathbf{M}\,\ddot{\mathbf{q}} + (\mathbf{B} - \mathbf{R})\,\dot{\mathbf{q}} + \mathbf{K}\,\mathbf{q} = \mathbf{z}\,, \qquad\qquad \text{(Gl. 6)}$$

und damit die Systemdämpfung wesentlich. Eine Rückführung von Winkellagen $\mathbf{q}$ würde direkt auf die Steifigkeitsmatrix wirken und hauptsächlich die Frequenzen $\omega_{0,i}$ und die Eigenformen $\psi_{0,i}$ beeinflussen. In der Praxis müssen nicht alle verwendeten Rückführgrößen gemessen werden, sondern fehlende Größen können mit Beobachterstrukturen generiert und so Sensorik eingespart werden.

Stand der Technik ist es, für die Drehzahlregelung eine einschleifige PI-Reglerstruktur zu verwenden, welche das Stelldrehmoment über einen Hauptmotor an einer Stelle des Räderzugs einspeist. Das I-Glied im Regler sorgt hierbei für die stationäre Genauigkeit der Festsollwertregelung und das P-Glied erhöht die Dynamik des Regelkreises.

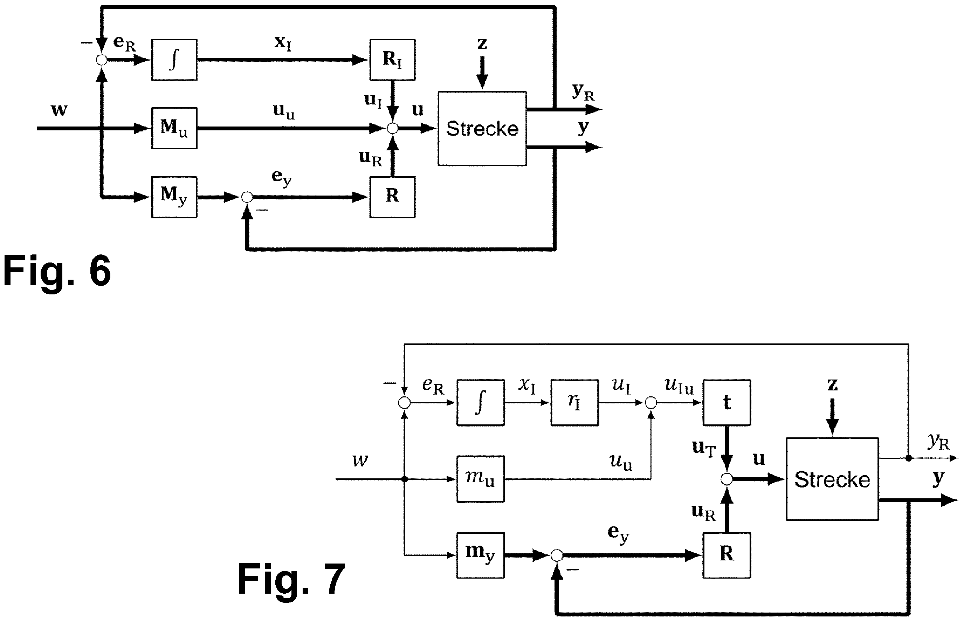

Stehen für die Regelung $m$ Stell- und $n$ Messausgänge zur Verfügung, so kann eine PI-Mehrgrößen-Ausgangsrückführung wie in Fig. 6 gezeigt zum Einsatz kommen, bei der mehrere Regelgrößen $\mathbf{y}_R$ definiert und über die Führungsgrößen $\mathbf{w}$ vorgegeben werden können. Insgesamt können so viele Regelgrößen definiert werden, wie unabhängige Stelleingänge existieren. In Anlehnung zum einschleifigen PI-Regler wirkt sich hier die zum Ausgangsfehler $\mathbf{e}_y$ proportional wirkende Reglermatrix $\mathbf{R} \in \mathbb{R}^{m \times n}$ hauptsächlich auf die schnelle Dynamik des geschlossenen Regelkreises aus, wogegen die Reglermatrix $\mathbf{R}_I \in \mathbb{R}^{m \times m}$ mit dem integrierten Regelfehler $\mathbf{e}_R$ die langsamere Regelungsdynamik beeinflusst und analog zum einschleifigen PI-Regler für die stationäre Genauigkeit der Regelgrößen sorgt. Der Ausgangsfehler $\mathbf{e}_y$ beschreibt die Abweichung zwischen den (gemessenen) Systemausgängen $\mathbf{y}$ und den stationären Endwerten des Entwurfsmodells, welche mit der Vorsteuermatrix $\mathbf{M}_y \in \mathbb{R}^{n \times m}$ aus der Führungsgröße $\mathbf{w}$ berechnet werden. Mit der Vorsteuermatrix $\mathbf{M}_u \in \mathbb{R}^{m \times m}$ kann das Führungsverhalten optimiert werden, was im Weiteren - aufgrund der zu den schwingungsfähigen Eigenwerten vergleichbar langsamen Sollwertänderung - wenig relevant ist und nicht weiter berücksichtigt wird ($\mathbf{M}_u = \mathbf{0}$).

Als Regelgröße wird in dieser Struktur die Maschinendrehzahl $v_{ges}$ aus (Gl. 5) und $m$ - 1 Stellgrößendifferenzen $u_{d,k-1} = u_{d,1}$ - $u_{d,k}$ für $k$ = 2 ... $m$ verwendet. Damit wird zum einen die stationäre Genauigkeit der Maschinendrehzahl sichergestellt als auch das Einstellen der gewünschten mittleren Drehmomentdifferenzen ermöglicht, mit der ein Zahnflankenabheben vermieden werden kann.

Alternativ zum PI-Mehrgrößenregler wird die Regelstruktur in Fig. 7 vorgeschlagen. Hier wird allein die Drehzahlgröße $v_{ges}$ als Regelgröße $y_R$ definiert, die über einen I-Regler und einer Eingangsverkopplung $\mathbf{t} \in \mathbb{R}^m$ auf das System zurückgeführt wird. Mithilfe des Vektors $\mathbf{t}$ kann eine (feste) prozentuale Drehmomentaufteilung erreicht werden. Im stationären Endzustand wird der Ausgangsfehler $\mathbf{e}_y$ (Drehzahlfehler, da $\mathbf{y} = \dot{\mathbf{q}}$ gewählt) zu Null und die Stellgröße setzt sich nur noch aus dem I-Anteil und der Vorsteuerung zusammen, und die prozentuale Aufteilung auf die Stelleingänge wird durch $\mathbf{t}$ festgelegt. Der Vorteil hierbei besteht in einer einfacheren Struktur, da nur noch ein I-Glied mit einem skalaren Parameter existiert. Sofern die geforderte Regelkreisdynamik für die Maschinendrehzahl deutlich langsamer als der schnelle Teil des geschlossenen Regelkreises, d.h. der gedämpften Eigenschwingungen, ist - was hier zutreffend ist - kann die Maschinendrehzahlregelung weitestgehend unabhängig von **R** mit dem Parameter $r_\mathrm{I}$ eingestellt werden, was einen weiteren Vorteil darstellt. Schließlich kann die prozentuale Aufteilung der Stellgröße gegenüber der Vorgabe von Differenzmomenten ebenfalls vorteilhaft sein. Ein Nachteil stellt die feste Drehmomentaufteilung dar, da formell der Regler für jede gewünschte Aufteilung neu ausgelegt werden müsste. Wie später diskutiert wird, ist eine Änderung der Aufteilung ohne neue Auslegung jedoch praktisch möglich und zeigt sich in der Praxis als robust stabil.

Die Reglermatrizen der vorgestellten Strukturen werden über die Minimierung einer Systemnorm bestimmt. Zur Beschreibung dieses Ansatzes wird zunächst nur die statische Rückführung über die Matrix **R** betrachtet, also das Regelziel der aktiven Schwingungsdämpfung.

Ziel ist es, die Positionsabweichungen innerhalb der Maschine zu minimieren, die durch die oben beschriebenen Störungen an den einzelnen Massen hervorgerufen werden. Die Wirkung einer periodischen Störung auf ein dynamisches System wird durch den Frequenzgang des Systems vom Störeingang zu dem betrachteten Ausgang beschrieben. Es ist damit ein sinnvolles Regelziel, die Frequenzgänge aller $N$ Störeingänge zu allen $N - 1$ Positionsabweichungen in geeigneter Form zu minimieren. Hierfür bietet sich die H2-Systemnorm an, die wie in (Gl. 4) dargestellt der Summe der quadratisch integrierten Einzelfrequenzgänge entspricht.

Statische Ausgangsrückführung:

Die relevante Frequenzgangmatrix ($\mathbf{d} \leftarrow \mathbf{z}$) von den Störeingängen **z** zu den Positionsabweichungen **d** des geschlossenen Regelkreises hängt von den Reglerparametern **R** ab ($\mathbf{R}_\mathrm{I} = \mathbf{0}$). Um das Optimierungsproblem zum Finden der Regelparameter sinnvoll zu formulieren, müssen auch die Eingangsgrößen $\mathbf{u}_\mathrm{R}$ berücksichtigt werden. Dies kann klassischerweise in Form eines zusätzlichen Güteterms erfolgen, so dass

$$\min_{\mathbf{R}}(\|\mathbf{d} \leftarrow \mathbf{z}\|_2^2 + \gamma^2 \cdot \|\mathbf{u}_\mathrm{R} \leftarrow \mathbf{z}\|_2^2) \qquad\qquad \text{(Gl. 7)}$$

gelöst wird. Durch die Variation von $\gamma$ kann die Gewichtung der Stellgröße festgelegt werden. Eine gegebene Begrenzung der Stellgrößen, zum Beispiel $\|\mathbf{u}_\mathrm{R} \leftarrow \mathbf{z}\|_2 \leq 10$, kann dabei durch eine geeignete Variation von $\gamma$ eingehalten werden.

Häufig wird bei der Optimierung von Systemnormen auch eine frequenzabhängige Gewichtung vorgenommen, indem die betrachteten Frequenzgänge mit einem Filter $\|\mathbf{W} \cdot (\mathbf{d} \leftarrow \mathbf{z})\|_2^2$ multipliziert werden. Die Reduzierung der Frequenzgänge erfolgt dann verstärkt in den Frequenzbereichen, in denen das Gewichtungsfilter $\mathbf{W}(\omega)$ hohe Werte annimmt. Dadurch, dass die Amplituden der höheren Resonanzen hier natürlicherweise stark abfallen, ist dies aber nicht unbedingt nötig.

Werden, anders als in Fig. 7 dargestellt, nicht nur Drehzahlen sondern alle Zustandsgrößen zurückgeführt, so ist das Optimierungsproblem (Gl. 7) geschlossen lösbar. Es lässt sich in diesem Fall zeigen, dass die statische Rückführung optimal ist, das heißt auch mit der Verwendung eines dynamischen Reglers würde kein besseres Ergebnis erreicht werden. In diesem Fall entspricht der sich ergebende Regler dem in einschlägiger Literatur bekanntem Ricatti-Regler.

Beschränkt man den Regler jedoch zum Beispiel auf eine statische Rückführung aller oder auch nur eines Teils der Drehzahlen, so ist im Allgemeinen keine geschlossene Lösung von (Gl. 7) möglich, sondern es muss eine numerische Optimierung erfolgen. Diese kann mit der Funktion Systune der Control System Toolbox des Programmpakets Matlab durchgeführt werden. Diese erlaubt auch eine direkte Berücksichtigung von Ungleichheitsnebenbedingungen, so dass das Optimierungsproblem

$$\min_{\mathbf{R}}\|\mathbf{d} \leftarrow \mathbf{z}\|_2 \quad \text{u. d. B.} \quad \|\mathbf{u}_\mathrm{R} \leftarrow \mathbf{z}\|_2 \leq 10 \qquad\qquad \text{(Gl. 8)}$$

betrachtet werden kann.

PI-Ausgangsrückführung mit Eingangsverkopplung:

Für die Berechnung der Regelparameter **R** und $r_\mathrm{I}$ der Struktur in Fig. 7 muss das Optimierungsproblem entsprechend zu

$$\min_{\mathbf{R},r_\mathrm{I}}(\|\mathbf{d} \leftarrow \mathbf{z}\|_2 + \gamma_v \cdot \|x_\mathrm{I} \leftarrow \mathbf{z}\|_2) \quad \mathrm{u.\,d.\,B.} \quad \|\mathbf{u_R} \leftarrow \mathbf{z}\|_2$$

$$\leq 10, \|u_\mathrm{I} \leftarrow \mathbf{z}\|_2 \leq \alpha_\mathrm{T}$$

(Gl. 9)

erweitert werden. Dabei sind die Stellgrößen der beiden Regleranteile getrennt beschränkt. Die für die Regelung der Starrkörperdrehzahl notwendige Stellgröße ergibt sich direkt aus der Reibung und der spezifizierten Beschleunigung im Hochlauf. Die darüber hinaus vorhandene Drehmomentreserve der Motoren kann (unter Berücksichtigung des Zahn-flankenabhebens) über $\mathbf{u_R}$ zur Schwingungsdämpfung verwendet werden. Somit stellt die Größe $\alpha_\mathrm{T}$ keinen echten Freiheitsgrad dar, und durch die getrennte Beschränkung wird später der Vergleich der verschiedenen Konzepte einfacher. Im Gütekriterium wird die integrierte Regelabweichung $x_\mathrm{I}$ der Starrkörperdrehzahl anstelle der Regelabweichung $e_\mathrm{R}$ selbst bewertet, da dabei die niedrigen Frequenzen stärker gewichtet werden.

Es zeigt sich, dass die geforderte Regelung der Starrkörperdrehzahl wesentlich langsamer gegenüber der restlichen Dynamik des Systems ist und nur unwesentlich von $\mathbf{R}$ abhängt. Umgekehrt wird die restliche Dynamik nur vernachlässigbar von $r_\mathrm{I}$ beeinflusst. Damit lässt sich (Gl. 9) in zwei Schritte unterteilen, bei dem zunächst $\mathbf{R}$ über (Gl. 8) berechnet wird. Dies erlaubt es, zunächst $\mathbf{R}$ in Hinblick auf eine gute Schwingungsdämpfung auszulegen, und anschlie-ßend $r_\mathrm{I}$ beispielsweise einfach anhand der Lage des dominanten Pols einzustellen. Das Gesamtverhalten des Regelkreises sollte dann allerdings kritisch überprüft werden. Ist im Einzelfall eine höhere Dynamik der Starrkörperdrehzahl notwendig, muss der Reglerentwurf in einem Schritt nach (Gl. 9) erfolgen.

Zu dieser Struktur ist auch zu bemerken, dass die durch $\mathbf{t}$ gegebene Drehmomentenaufteilung ein Systemparameter ist. Wird dieser geändert, so ändert sich das System und damit ist formal ein neuer Reglerentwurf notwendig, um Stabilität und Regelgüte zu gewährleisten. Alternativ kann für einen festen Regler ein Test auf Stabilität bezüglich aller sinnvollen $\mathbf{t}$ (Summe der Elemente von $\mathbf{t}$ ergibt eins und es treten keine negativen Elemente in $\mathbf{t}$ auf) mittels der $\mu$-Analyse erfolgen. Sofern die Dynamik der geregelten Starrkörperdrehzahl (Maschinendrehzahl) ausreichend langsam gegenüber der schwingungsfähigen Eigenwerte des Systems ist, ist zu erwarten, dass sich die robuste Stabilität nachweisen lässt, und sich darüber hinaus auch nur ein geringer Einfluss von $\mathbf{t}$ auf das Regelverhalten der Schwingungsdämpfung zeigt. Damit kann die Drehmomentaufteilung ohne einen neuen Reglerentwurf während des Betriebes der Regelung angepasst werden.

PI-Mehrgrößen-Ausgangsrückführung:

Für die Berechnung der Regelparameter $\mathbf{R}$ und $\mathbf{R}_\mathrm{I}$ der Struktur in Fig. 6 wird das Optimierungsproblem

$$\min_{\mathbf{R},\mathbf{R_I}} \left( \|\mathbf{d} \leftarrow \mathbf{z}\|_2 + \gamma_v \cdot \|x_{\mathrm{I},v} \leftarrow \mathbf{z}\|_2 + \gamma_{\triangle u} \cdot \|\mathbf{x}_{\mathrm{I},\triangle u} \leftarrow \mathbf{z}\|_2 \right)$$

(Gl. 10)

$$\mathrm{u.\,d.\,B.} \quad \|\mathbf{u_R} \leftarrow \mathbf{z}\|_2 \leq 10, \qquad \|\mathbf{u_I} \leftarrow \mathbf{z}\|_2 \leq \alpha_\mathrm{I}$$

gelöst. Dabei ist vorgesehen, dass die integrierte Abweichung $x_{\mathrm{I},v}$ der Starrkörperdrehzahl sowie die integrierte Abwei-chung der Stellgrößendifferenz $\mathbf{x}_{\mathrm{I},\triangle u}$ getrennt gewichtet werden, um hierfür unterschiedliche Dynamiken beeinflussen zu können.

Für den folgenden Vergleich und der Diskussion verschiedener Regelkreiskonfigurationen wird die einheitliche Stellgrenze von $\|\mathbf{u_R} \leftarrow \mathbf{z}\|_2 \leq 10$ verwendet. Dies entspricht näherungsweise einem gleichen Stellgrößeneinsatz. Die I-Anteile im Regler werden so eingestellt, dass sich eine langsame Dynamik der Regelung der Starrkörperdrehzahl bzw. der Drehmomentendifferenzen ergibt und so kein wesentlicher Einfluss auf die Schwingungsdämpfung erfolgt. Aus diesem Grund ist es ausreichend, im Folgenden nur die statische Rückführung $\mathbf{R}$ zu betrachten.

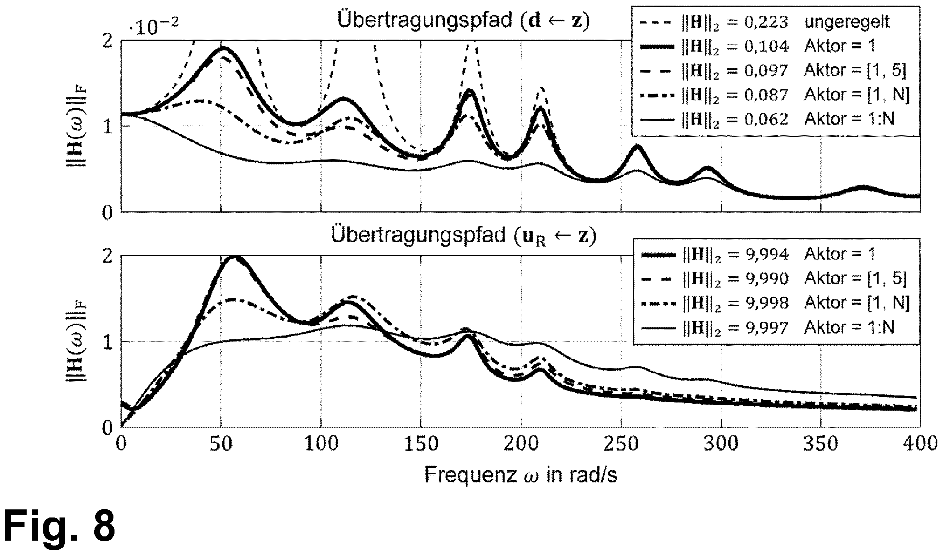

Fig. 8 oben zeigt den Verlauf der Frobenius-Norm (Gl. 3) von den Störeingängen $z$ zu den Winkeldifferenzen $\mathbf{d}$ zur optischen Bewertung der erreichbaren Schwingungsdämpfung bei Verwendung von einem, zwei oder $N = 10$ Motoren. In der Legende ist zum Vergleich die erreichte H2-Systemnorm angegeben. Das ungeregelte System (Strichlinie, schmal) zeigt deutlich die schwachgedämpften Resonanzen. Die Referenz stellt hier das vollaktuierte System (Volllinie, schmal) mit einem Motor je Freiheitsgrad dar, womit das System erwartungsgemäß am stärksten gedämpft wird. Bereits mit einem Motor an der Position eins (Volllinie, breit) kann eine beachtliche Dämpfung der ersten Resonanzen bei ca. 50 rad/s, 120 rad/s und 180 rad/s erreicht werden. Dagegen hilft die Hinzunahme eines zweiten Motors an der Position fünf bei der ersten und dritten Resonanz nur unwesentlich (Strichlinie, breit). Eine Ursache hierfür liegt im schwachen Einfluss auf den ersten und dritten Eigenwert an der Position fünf, was Fig. 3 zeigt. Der Einfluss auf den zweiten Eigenwert ist hingegen gut und erklärt hier die größere Dämpfung. Würde für den zweiten Motor die letzte Position $N$ gewählt (Strichpunktlinie, breit), so würde die erreichbare Dämpfung - wie es die Eigenformen erwarten lassen - stärker ausfallen. In Fig. 8 unten ist die Norm von den Störeingängen auf die Stellgröße $\mathbf{u}_R$ dargestellt. Der wesentliche Stellaufwand findet im relevanten Frequenzband zwischen ca. 25 rad/s bis ca. 300 rad/s ($\approx$ 50 Hz) statt.

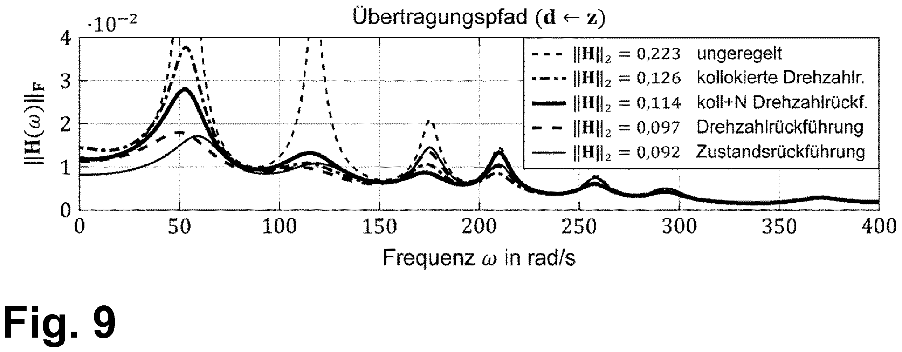

Fig. 9 zeigt den Einfluss der zurückgeführten Größen bei den festen Motorpositionen eins und fünf. Die Referenz stellt die Zustandsrückführung (Volllinie, schmal) dar. Werden nicht alle Zustände sondern lediglich alle Drehzahlen zurückgeführt (Strichlinie, breit), kann das System praktisch genauso gut gedämpft werden, was zu erwarten war. Werden nur kollokierte Drehzahlen zurückgeführt, also die Drehzahlen an den Stellpositionen, so fällt die erreichbare Systemdämpfung schon erheblich geringer aus (Strichpunktlinie, breit). Die Rückführung einer weiteren Drehzahl an der Position $N$ (Volllinie, breit) ergibt für die Dämpfung der ersten und dritte Resonanz eine merkliche Erhöhung (auf Kosten der zweiten Resonanz).

Es wurden zwei Reglerstrukturen zur Drehzahlregelung einer Druckmaschine vorgestellt sowie eine optimierungsbasierte Methode zur Auslegung der Reglerparameter angegeben. Letztere erlaubt dabei eine systematische und objektive Bewertung verschiedener möglicher Antriebskonfigurationen. Dieses wurde beispielhaft diskutiert. Die Ergebnisse decken sich dabei mit den qualitativen Aussagen aus der Betrachtung der Eigenformen.

Als Regelgröße für die Maschinendrehzahl kann beispielsweise eine einzelne Drehzahl von einer mechanischen Koordinate oder ein gemittelter Wert aus verschiedenen Drehzahlgrößen verwendet werden. Wie vorgeschlagen kann es vorteilhaft sein, die einzelnen Drehzahlwerte mit der jeweiligen Massenträgheit an dieser Koordinate zu gewichten (Herleitung aus Impulssatz). Die Regelgröße für die Maschinendrehzahl wird damit unabhängiger von lokalen Drehzahlschwankungen, da diese Mittelwertbildung, insbesondere bei den hier vorliegenden geringen mechanischen Dämpfungen, der Starkörperdrehzahl zugehörigen Eigenform entspricht und somit weitestgehend orthogonal bezüglich der Massenmatrix zu den restlichen Eigenformen ist.

Die Verwendung der Differenzen der Stellgrößen als weitere Regelgrößen oder die einstellbare Aufteilung der stationären Gesamtstellgröße erlaubt eine weitere positive Beeinflussung der Druckmaschine. Durch diese Regelgröße kann die Drehmomentrichtung beeinflusst und eine Änderung während des Betriebs vermieden und damit ein mögliches Zahnflankenabheben verhindert werden. Verändert sich der Gesamtdrehmomentbedarf der Druckmaschine aufgrund geänderter Maschinenzustände, wie Maschinendrehzahl, Maschinenerwärmung oder Druckmodulzuständen etc., so ändert sich der Drehmomentfluss innerhalb des Räderzugs und eine geänderte mittlere Verschiebung zwischen den einzelnen Modulen stellt sich ein. Diesem drucktechnisch nachteiligen Effekt kann ebenso mit der Vorgabe von Differenzdrehmomenten entgegengewirkt werden.

Lokale Winkel- bzw. Drehzahlabweichungen aufgrund angreifender periodischer Störungen zum Beispiel durch periodische Beschleunigungsmechanismen oder transiente Störungen zum Beispiel durch eine Änderung des Betriebszustands der Druckmaschine, beispielsweise der Produktionsdrehzahl (Maschinendrehzahl), werden mithilfe der aktiven Drehschwingungsdämpfung durch die statische Drehzahlrückführung erreicht.

Mithilfe der Modal Analyse (Eigenformen) und weitere druckmaschinenspezifischer Randbedingungen wurden vorteilhaften Positionen für Mess- und Stellglieder angegeben und verschiedene Möglichkeiten beispielhaft untersucht.

Eine Möglichkeiten zur visuellen Bewertung und dem wertemäßigen Vergleich verschiedener Regler wurden angegeben und für die Regelparameteroptimierung verwendet. Im Fall der geringen dynamischen Anforderungen an das Führungsverhalten für die Maschinendrehzahl kann die Auslegung der statischen Drehzahlrückführung zur Beeinflussung des relevanten (dynamischen) Eigenverhaltens (Störübertragungsverhalten) getrennt erfolgen. Für beide Reglerstrukturen wurden die Optimierungsprobleme für ein einschrittiges oder zweischrittiges Vorgehen aufgestellt.

**Patentansprüche**

1.   Regelung von modular aufgebauten Druckmaschinen, insbesondere Bogendruckmaschinen, mit einem oder mehreren Hauptantriebsmotoren (M), der oder die mit einem Antriebsstrang verbunden ist oder sind,

   wobei der Antriebsstrang durch miteinander verbundene sich bewegende Teile innerhalb der Module gebildet wird,
   **dadurch gekennzeichnet, dass**
   für die Regelung einer Maschinendrehzahl und einer aktiven Dämpfung von Schwingungen eine zentrale Reglereinheit (ZR) verwendet wird,
   wobei für die Regelung mehrere Drehzahlen von verschiedenen Positionen des Antriebsstrangs verwendet werden,
   wobei die Drehzahlen mit Sensoren (S) erfasst und/oder mit Beobachtern geschätzt werden,
   wobei als Reglerstruktur ein PI-Mehrgrößenregler verwendet wird,
   wobei die Reglerstruktur mit einer Eingangsverkopplung derart vereinfacht wird, dass eine feste oder variable von einem Zustand der Druckmaschine abhängige Drehmomentaufteilung realisiert wird.

**2.** Regelung nach Anspruch 1,
**dadurch gekennzeichnet, dass**
jede Drehzahl auf alle Hauptantriebsmotoren wirkt oder mehrere Ausgansfehler auf alle Hauptantriebsmotoren wirken.

**3.** Regelung nach einem oder mehreren der Ansprüche 1 bis 2,
**dadurch gekennzeichnet, dass**

eine Maschinendrehzahlregelgröße aus der gewichteten Mittelung von verschiedenen aktuellen Drehzahlen berechnet wird,
wobei die jeweiligen Gewichte sich aus den Massenträgheiten des Antriebsstrangs ergeben.

**4.** Regelung nach einem oder mehreren der Ansprüche 1 bis 3,
**dadurch gekennzeichnet, dass**
neben einer Maschinendrehzahlregelgröße weitere Regelgrößen wie vorzugsweise Stelldrehmomentdifferenzen gewählt werden.

**5.** Regelung nach einem oder mehreren der Ansprüche 1 bis 4,
**dadurch gekennzeichnet, dass**
Differenzdrehmomente durch Berechnungsmodelle so gewählt werden, dass ein Zahnflankenabheben im Antriebsstrang verhindert wird.

**6.** Regelung nach einem oder mehreren der Ansprüche 1 bis 5,
**dadurch gekennzeichnet, dass**
ein Reglerentwurf nach Führungsverhalten und Störverhalten getrennt erfolgt.

**7.** Regelung nach einem oder mehreren der Ansprüche 1 bis 6,
**dadurch gekennzeichnet, dass**

Reglerparameter durch Optimierung einer System norm gewonnen werden,
wobei das zu optimierende System die Positionen wesentlicher Störquellen als Systemeingänge und die für die Druckqualität relevanten Differenzwinkel als Systemausgänge aufweist.

**8.** Regelung nach einem oder mehreren der Ansprüche 1 bis 7,
**dadurch gekennzeichnet, dass**

für die Positionierung des Hauptantriebsmotors Eigenformen des Antriebsstrangs und Positionen wesentlicher Störquellen herangezogen werden,
wobei sich vorzugsweise die Hauptantriebsmotoren in den Randpositionen im letzten und/oder im ersten Modul, und/oder im Bereich eines Wendungsmoduls befinden.

**Claims**

**1.** A control of modularly constructed printing presses, in particular sheet-fed printing presses, having one or several main drive motors (M), which is or are connected to a drive train,

wherein the drive train is formed by moving parts, which are connected to one another, within the modules,
**characterized in that**
a central controller unit (ZR) is used to control a machine speed and an active damping of vibrations,
wherein several speeds of different positions of the drive train are used for the control,
wherein the speeds are captured by means of sensors (S) and/or are estimated by means of observers,
wherein a PI multi-variable controller is used as controller structure,
wherein the controller structure having an input connection is simplified in such a way that a fixed or variable torque distribution, which is a function of a state of the printing press, is realized.

**2.** The control according to claim 1,
**characterized in that**

each speed acts on all main drive motors or several output errors act on all main drive motors.

3. The control according to one or several of claims 1 to 2,
   **characterized in that**

   a machine speed control variable is calculated from the weighted averaging of different current speeds,
   wherein the respective weights follow from the mass inertias of the drive train.

4. The control according to one or several of claims 1 to 3,
   **characterized in that**
   further control variables, such as preferably target torque differences, are selected in addition to a machine speed control variable.

5. The control according to one or several of claims 1 to 4,
   **characterized in that**
   differential torques are selected by means of calculating models so that a tooth flank take-off in the drive train is prevented.

6. The control according to one or several of claims 1 to 5,
   **characterized in that**
   a controller design takes place so as to be separated by control response and disturbance behavior.

7. The control according to one or several of claims 1 to 6,
   **characterized in that**

   controller parameters are obtained by optimizing a system standard,
   wherein the system to be optimized has the positions of significant sources of interference as system inputs and the differential angles, which are relevant for the print quality, as system outputs.

8. The control according to one or several of claims 1 to 7,
   **characterized in that**

   eigenmodes of the drive train and positions of significant sources of interference are used for the positioning of the main drive motor,
   wherein the main drive motors are preferably located in the edge positions in the last and/or in the first module, and/or in the region of a turning module.

**Revendications**

1. Réglage de machines d'impression à structure modulaire, en particulier de machines d'impression de feuilles, comportant un ou plusieurs moteurs d'entraînement principaux (M) qui est ou qui sont connectés à un groupe motopropulseur,

   le groupe motopropulseur étant constitué par des pièces en mouvement reliées les unes aux autres à l'intérieur des modules,
   **caractérisé en ce que**,
   pour le réglage d'un régime mécanique et d'un amortissement actif d'oscillations, on utilise une unité de réglage centrale (ZR),
   plusieurs régimes de différentes positions du groupe motopropulseur étant utilisés pour le réglage,
   les régimes étant détectés par des capteurs (S) et/ou évalués par des observateurs,
   un régleur de surdimensionnement PI étant utilisé comme structure de réglage,
   la structure de réglage étant simplifiée avec un couplage d'entrée de manière à ce qu'une répartition de couple fixe ou variable dépendant d'un état de la machine d'impression soit réalisée.

2. Réglage selon la revendication 1,
   **caractérisé en ce que**
   chaque régime agit sur tous les moteurs d'entraînement principaux ou que plusieurs erreurs de sortie agissent sur tous les moteurs d'entraînements principaux.

3. Réglage selon une ou plusieurs des revendications 1 à 2,
**caractérisé en ce**

> **qu'**un paramètre de réglage de régime mécanique est calculé à partir de la moyenne pondérée de différents régimes actuels,
> les pondérations respectives résultant des inerties de masse du groupe motopropulseur.

4. Réglage selon une ou plusieurs des revendications 1 à 3,
**caractérisé en ce que**,
outre un paramètre de réglage de régime mécanique, d'autres paramètres de réglage, comme de préférence des différences de couple de positionnement, sont choisis.

5. Réglage selon une ou plusieurs des revendications 1 à 4,
**caractérisé en ce que**
des couples de différence sont sélectionnés par des modèles de calcul de manière à ce qu'un relèvement de flanc de dent dans le groupe motopropulseur soit évité.

6. Réglage selon une ou plusieurs des revendications 1 à 5,
**caractérisé en ce**
**qu'**un projet de réglage se fait séparément en fonction des réactions au guidage et les réactions aux perturbations.

7. Réglage selon une ou plusieurs des revendications 1 à 6,
**caractérisé en ce que**
des paramètres de réglage sont obtenus par optimisation d'une norme de système, le système à optimiser présentant les positions des sources de perturbation essentielles en tant qu'entrées de système et les angles de différence relevant de la qualité d'impression sous forme de sorties de système.

8. Réglage selon une ou plusieurs des revendications 1 à 7,
**caractérisé en ce que**,

> pour le positionnement du moteur d'entraînement principal, on se réfère aux formes propres du groupe motopropulseur et aux positions des sources de perturbation essentielles,
> les moteurs d'entraînements principaux se trouvant de préférence dans les positions périphériques dans le dernier et/ou dans le premier module,
> et/ou au niveau d'un module de retournement.

**Fig. 1**

EP 3 672 808 B1

Fig. 2

Fig. 3

Fig. 6

Fig. 7

Fig. 8

EP 3 672 808 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008042396 A1
- DE 102007049455 B4
- DE 19502909 B4
- DE 102008048406 A1
- DE 4132765 A1
- DE 4218604 A1
- DE 10309670 A1